# FASCICULE DE BREVET EUROPEEN

(11) **EP 0 407 966 B1**
(45) Date de publication et mention de la délivrance du brevet: **21.04.1993**
(21) Numéro de dépôt: 90113153.2
(22) Date de dépôt: 10.07.1990
(51) Int. Cl.: H01M 2/10

(54) **Réceptacle amovible pour pile, en particulier pour pile-bouton**
Herausnehmbarer Behälter für Batterien, insbesondere für Knopfzellen
Detachable receptable for battery, particularly for button cells

(30) Priorité: 12.07.1989 FR 8909398
(43) Date de publication de la demande: 16.01.1991
(73) Titulaire: ALCATEL BUSINESS SYSTEMS, F-75008 Paris (FR)
(72) Inventeur: Spinner, Roland, F-67150 Erstein (FR)
(74) Mandataire: Weinmiller, Jürgen

(56) Documents cités:
- FR-A- 2 000 152
- NL-A- 6 607 929
- US-A- 4 842 966
- PATENT ABSTRACTS OF JAPAN, vol. 12, no. 291 (E-644)[3138], 9 août 1988; & JP-A-63 66 847 (SEIKO EPSON CORP.) 25-03-1988

## Description

La présente invention se rapporte à un réceptacle amovible pour pile, en particulier pour pile plate dite "pile-bouton".

Les "piles-bouton" sont des piles plates et circulaires qui sont en particulier utilisées dans les postes téléphoniques électroniques qui comportent au moins une carte à mémoire. Ces piles viennent normalement s'encastrer étroitement dans un réceptacle amovible en matière plastique, et l'opération de changement d'une pile usée ou défectueuse nécessite normalement l'extraction préalable de ce réceptacle.

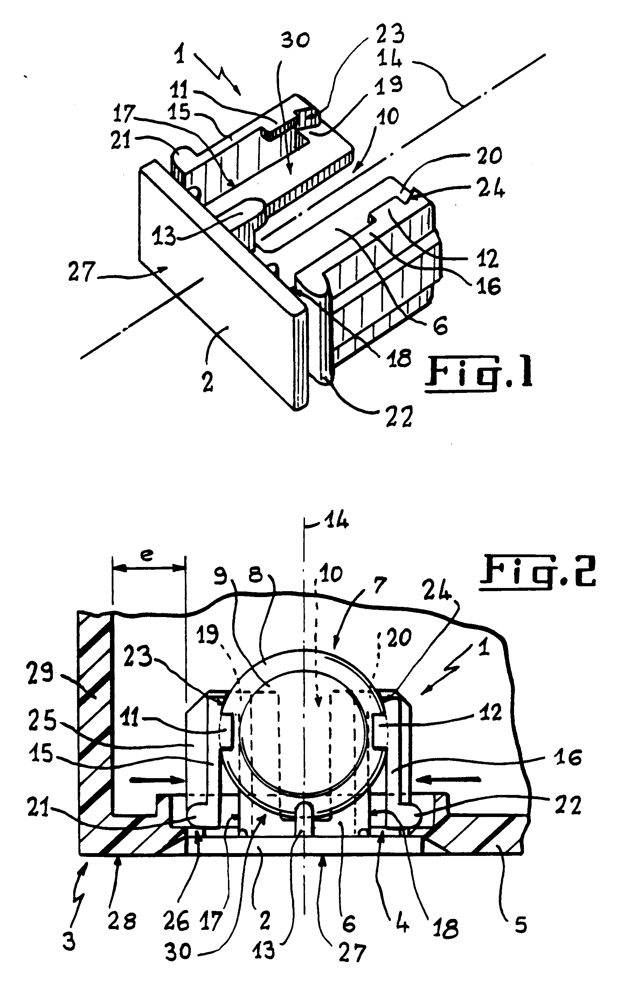

La figure 1 jointe montre un réceptacle de pile-bouton tel qu'il est couramment réalisé à l'heure actuelle, et la figure 2 montre ce même réceptacle en place, avec une pile-bouton 7, dans un socle 5 de boîtier 3 pour poste téléphonique électronique.

Ce réceptacle de l'art connu, qui est désigné dans son ensemble par la référence 1 est une pièce monobloc en matière plastique semi-rigide qui définit un espace central 30 de réception et coincement de la pile-bouton 7 et qui se compose :
. d'un socle rectangulaire 2 qui reste seul visible de l'extérieur après mise en place de ce réceptacle 1 dans le boîtier 3 du poste téléphonique et qui participe essentiellement à la fixation du réceptacle 1 dans l'ouverture rectangulaire 4 prévue à cet effet dans le socle 5 de ce boîtier ;
. d'une paroi plane, médiane et longitudinale, 6, orthogonale au socle 2 et destinée à former la face d'appui de la plus grande face de la pile-bouton 7, ou autrement dit la face d'appui de son pôle positif 8 (le pôle négatif 9 étant de plus petit diamètre) ; une ouverture 10 est prévue dans cette plaque arrière 6 pour laisser le passage pour la cosse de contact qui fait partie de la carte électronique (non représentée) ;
. de trois protubérances 11, 12, 13 de retenue et de détrompage de la pile 7, dans le réceptacle 1, la protubérance 13 partant du socle 2, et les protubérances 11 et 12 partant, de manière symétrique par rapport à l'axe 14 du réceptacle et en direction de cet axe, de deux bras en porte-à-faux 15 et 16 qui sont parallèles aux côtés latéraux 17, 18 de la plaque arrière 6, légèrement écartés de ces derniers et fixés sur des épaulements 19, 20 prévus à cet effet sur les extrémités libres latérales de la plaquette de fond 6.

Ces bras latéraux 15, 16 présentent par suite une certaine souplesse en direction de l'axe 14, et ils portent chacun, à leur extrémité libre qui arrive à courte distance du socle 2, un ergot 21, 22, qui est dirigé en sens inverse de la protubérance, respectivement 11 et 12, portée par le même bras, 15 et 16 et coopérant avec le socle 2 pour assurer le coincement du réceptacle 1 dans l'ouverture 4 du socle 5 du boîtier 3.

A noter que les ergots 21, 22 étant considérés comme situés à la partie libre "inférieure" des bras souples 15, 16, leur partie "supérieure" présente une face inclinée 23, 24 épousant grossièrement le diamètre extérieur de la pile 7 afin d'assurer son maintien en position dans le sens de l'axe 14. En outre, un détrompeur 25 est, bien entendu, prévu en coopération avec une encoche correspondante 26 de l'ouverture 4 afin d'empêcher le montage du réceptacle 1 dans le mauvais sens. Enfin, il convient de remarquer qu'une fois mis en place (figure 2), a face visible 27 du socle 2 arrive bien entendu à fleur de celle, 28, du socle 5.

Ce réceptacle connu présente quelques inconvénients. Pour le retirer, il est nécessaire d'escamoter les ergots 21, 22 en exerçant sur les bras 15 et 16 une pression dans le sens indiqué par les flèches F sur la figure 2. Ceci ne peut être fait qu'en ouvrant le boîtier 3 afin d'avoir accès à ces bras de coincement 15 et 16, de sorte que le changement de pile ne peut pas s'effectuer très rapidement, comme il est en général souhaité. En outre, l'ouverture du poste téléphonique présente un certain danger, car les composants qu'il contient sont alors exposés aux décharges électrostatiques. Il est bien évident sur la figure 2 qu'il n'est pas possible d'extraire le réceptacle 1 sans risquer fortement de casser les ergots de blocage 21 et 22. Par ailleurs, si, comme c'est le cas sur la figure 2, l'ouverture 4 se trouve très proche d'une des parois verticales 29 du boîtier 3, il est difficile de passer le doigt dans le faible espace e restant entre le bras 15 et cette paroi 29, de sorte que l'extraction du réceptacle 1 est malaisée. Enfin, les faces inclinées de maintien 23 et 24 sont assez difficiles à écarter de la pile 7, de sorte que l'on a beaucoup de mal à l'extraire de son réceptacle 1, une fois celui-ci retiré du boîtier 3.

L'invention vise à remédier à ces inconvénients. Elle se rapporte à cet effet à un réceptacle amovible pour pile, en particulier pour pile-bouton, ce réceptacle étant réalisé d'un seul bloc dans une matière plastique semi-rigide et possédant, outre un espace central de réception et coincement de la pile, deux bras souples situés de part et d'autre de cet espace central, ces deux bras ayant chacun une extrémité libre portant un ergot apte à assurer, de manière amovible et en coopération avec le socle du réceptacle, le coincement de ce réceptacle dans une ouverture de la paroi rigide de réception du réceptacle ainsi qu'éventuellement de réception du circuit électronique destiné à être alimenté par la pile. Ce socle n'est pas monobloc, mais il se compose de trois parties distinctes et écartées l'une de l'autre, dont :
. une partie centrale qui soutient une portion non négligeable des protubérances ou portions de paroi qui définissent l'espace central précité , et
. deux parties latérales, situées de part et d'autre de cette partie centrale, écartées de cette dernière, et portées par les extrémités libres respectives des deux bras souples précités, de manière à y définir sur chacun un second ergot de coincement situé au delà du premier, et coopérant avec celui-ci, ces seconds ergots étant, lorsque le réceptacle est en place dans ladite ouverture, accessibles de l'extérieur de ladite paroi rigide de réception, de sorte qu'il suffit alors d'exercer une pression sur ces deux seconds ergots dans le sens tendant à les rapprocher de la partie centrale du socle, pour entraîner le basculement des bras souples en direction de cette partie centrale et par suite dégager les deux autres ergots de coincement, portés par chacun de ces bras, des bords de ladite ouverture, ce qui permet alors d'extraire aisément ce réceptacle, et ce qui facilite également l'extraction de la pile.

De toute façon, l'invention sera bien comprise, et ses avantages et autres caractéristiques ressortiront, lors de la description suivante d'un exemple non limitatif de réalisation de ce réceptacle amovible, destiné dans cet exemple à recevoir une pile-bouton pour poste téléphonique électronique à mémoire, en référence au dessin schématique annexé dans lequel :
- Figure 3 est une vue en perspective de ce réceptacle ;
- Figure 4 montre ce même réceptacle en place, avec une pile-bouton, dans son boîtier de poste téléphonique ; et
- Figure 5 est une vue similaire à la figure 4, mais montrant l'opération d'extraction de ce réceptacle.

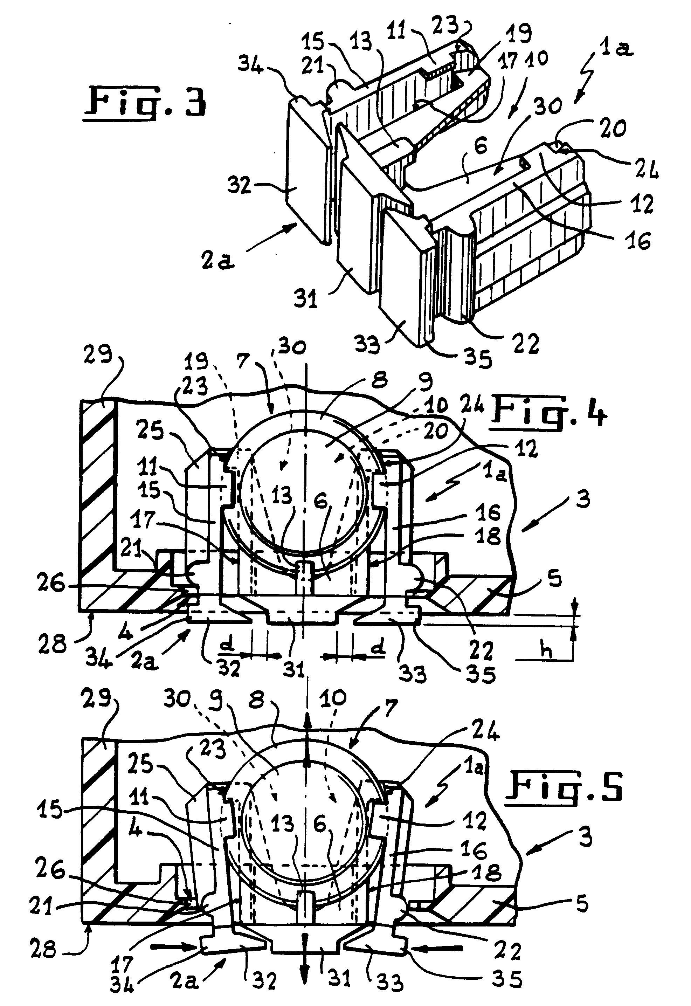

Les figures 3 et 4 sont respectivement les homologues des figures 1 et 2, précédemment décrites, et les éléments semblables ou identiques y sont pour plus de clarté désignés par les mêmes chiffres de référence.

Le réceptacle la représenté sur ces figures 3 et 4 est, à l'instar de celui, 1, selon les figures 1 et 2, réalisé d'un seul bloc dans une matière plastique semi- rigide. Il possède un espace central 30 de réception et coincement de la pile 7 sensiblement identique à celui du réceptacle 1, avec une plaque de fond 6, des protubérances 11, 12, 13, et des faces inclinées de retenue 23, 24. Il possède également deux bras souples 15, 16, situés de part et d'autre de cet espace central 30, avec, comme précédemment, chacun une extrémité libre portant un ergot, respectivement 21 et 22, apte à assurer, de manière amovible et en coopération avec le socle 2a du réceptacle 1a, le coincement de ce réceptacle dans l'ouverture 4 précitée du socle 5 du boîtier 3 du poste téléphonique.

Contrairement au socle 2 du réceptacle 1, le socle 2a du réceptacle 1a n'est pas d'un seul bloc, mais il se compose de trois parties distinctes 31, 32, 33, qui sont écartées l'une de l'autre :
. Une partie centrale 31 qui soutient la plaque de fond 6 et la protubérance 13, qui forment à elles-deux une portion non négligeable de l'espace central de maintien 30.
. Deux parties latérales 32,33 qui sont situées de part et d'autre de cette partie centrale 31 et qui en sont écartées d'un espace d de l'ordre de deux à trois millimètres, sensiblement égal à celui qui sépare les bras latéraux 15 et 16 de la plaque de fond médiane 6. Ces deux parties latérales 32, 33 sont portées par les extrémités libres des bras souples 15 et 16, de manière à y définir sur chacun un second ergot de coincement, respectivement 34 et 35, situé au delà du premier, 21 et 22, et coopérant avec celui-ci pour emprisonner étroitement le bord de l'ouverture 4.

Comme on le voit sur la figure 4, ces seconds ergots 34, 35 sont, lorsque le réceptacle 1a est en place dans l'ouverture 4, aisément accessibles de l'extérieur du boîtier 3 et, afin de faciliter cette accessibilité, le socle 2a n'arrive plus à fleur de la face externe 28 du socle 5 du boîtier 3, mais il en dépasse légèrement vers l'extérieur, d'une hauteur h de l'ordre du millimètre.

A l'instar du réceptacle 1, le réceptacle la se met en place par enclipsage à partir de l'extérieur, c'est à dire sans ouvrir le boîtier 3 (voir la figure 4).

En se reportant à la figure 5, son extraction s'effectue tout simplement, sans ouvrir le boîtier 3, en exerçant une pression sur les ergots 34 et 35 dans le sens, indiqué par les flèches, qui tend à les rapprocher de la partie centrale 31 du socle 2a, ce qui entraîne le basculement des bras 15, 16 en direction de cette partie centrale et dégage par voie de conséquence les ergots de coincement 21 et 22 des bords de l'ouverture 4 et permet alors l'extraction en douceur du réceptacle la avec la pile 7 qu'il contient.

Cette extraction effectuée, il est alors aisé de retirer la pile 7 en maintenant la pression sur les ergots 34, 35 et en tirant alors la pile vers le haut (figure 5) :le basculement des bras 15 et 16 entraîne en effet l'écartement des faces inclinées 23, 24, ce qui facilite l'extraction de la pile 7.

Comme il va de soi, l'invention n'est pas limitée à l'exemple de réalisation qui vient d'être décrit, mais elle est est bien au contraire susceptible d'être réalisée sous des formes équivalentes, destinées par exemple à recevoir d'autres formes de piles. Ses bonnes qualités de service et de fiabilité lui permettent une utilisation très variée, et ce réceptacle peut être par exemple inséré dans un raidisseur de cartes, à mémoire ou autres, utilisées dans un autre domaine que celui de la téléphonie.

## Revendications

1. Réceptacle amovible pour pile, en particulier pour pile-bouton (7), ce réceptacle (1a) étant réalisé d'un seul bloc dans une matière plastique semi-rigide et possédant, outre un espace central (30) de réception et coincement de la pile (7), deux bras souples (15, 16) situés de part et d'autre de cet espace central (30), ces deux bras (15, 16) ayant chacun une extrémité libre portant un ergot (21, 22) apte à assurer, de manière amovible et en coopération avec le socle (2a) du réceptacle (1a), le coincement de ce réceptacle dans une ouverture (4) prévue à cet effet dans une paroi rigide réceptrice (5), caractérisé en ce que le socle (2a) n'est pas monobloc, mais se compose de trois parties distinctes et écartées l'une de l'autre, dont :
. une partie centrale (31) qui soutient une portion non négligeable (16, 6) des protubérances ou portions de paroi qui définissent l'espace central (30) de réception et coincement de la pile (7) ; et
. deux parties latérales (32, 33) qui, étant situées de part et d'autre de cette partie centrale (31) et étant écartées de cette dernière, sont portées par les extrémités libres respectives des deux bras souples (15, 16), de manière à y définir sur chacun un second ergot de coincement (34, 35) situé au delà du premier (21, 22) et coopérant avec celui-ci, ces seconds ergots (34, 35) étant, lorsque le réceptacle (2a) est en place dans ladite ouverture (4), accessibles de l'extérieur de la paroi rigide réceptrice (5), de sorte qu'il suffit alors d'exercer sur ces deux seconds ergots (34, 35) une pression dans le sens tendant à les rapprocher de la partie centrale (31) du socle, pour entraîner le basculement des bras souples (15, 16) vers cette partie centrale (31) et par suite dégager des bords de l'ouverture réceptrice (4) les deux autres ergots de coincement (21, 22), et qui permet alors d'extraire le réceptacle et facilite par ailleurs l'extraction de la pile (7).

2. Réceptacle amovible selon la revendication 1, caractérisé en ce que son socle (2a) n'arrive pas à fleur de la face externe (28) de la paroi rigide réceptrice (5), mais en dépasse légèrement vers l'extérieur d'une hauteur (h) suffisante pour faciliter l'accessibilité aux seconds ergots (34, 35) lorsque ce réceptacle (2a) est en place dans son ouverture réceptrice (4).

3. Réceptacle amovible selon la revendication 1 ou la revendication 2, caractérisé en ce que la distance (d) d'écartement entre la partie centrale (31) du socle (2a) et chacune de ses parties latérales (32, 33), est sensiblement égale à celle qui sépare chacun des bras souples (15, 16) de la plaque de fond médiane (6) qui définit, avec des organes de coincements (11, 12, 13, 23, 24), ledit espace central (30) de réception et coincement de la pile (7).

## Patentansprüche

1. Herausnehmbarer Behälter (1a) für eine Batteriezelle, insbesondere Knopfzellen (7), der aus einem einzigen Block aus halbsteifem Kunststoff besteht und außer einem zentralen Aufnahme- und Einklemmraum (30) für die Zelle zwei flexible Arme (15, 16) zu beiden Seiten des zentralen Raumes (30) besitzt, wobei die beiden Arme (15, 16) jeweils ein freies Ende aufweisen, das einen Nocken (21, 22) trägt, der lösbar und im Zusammenwirken mit dem Sockel (2a) des Behälters (1a) das Festklemmen des Behälters in einer Öffnung (4) bewirkt, die hierzu in einer steifen Aufnahmewand (5) vorgesehen ist, dadurch gekennzeichnet, daß der Sockel (2a) nicht aus einem Stück ist, sondern sich aus drei unterschiedlichen und voneinander auf Abstand gehaltenen Teilen zusammensetzt, nämlich:
- einem zentralen Teil (31), das einen erheblichen Teil (16, 6) der Vorsprünge oder von Wandabschnitten abstützt, die den zentralen Aufnahme- und Einklemmraum (30) für die Zelle (7) definieren, und
- zwei seitlichen Teilen (32, 33), die zu beiden Seiten des zentralen Teils (31) angeordnet sind und zu diesem einen Abstand halten und von den freien Enden der beiden flexiblen Arme (15, 16) getragen werden, derart, daß dort an jedem Arm ein zweiter Klemmnocken (34, 35) definiert wird, der hinter dem ersten Nocken (21, 22) angebracht ist und mit diesem zusammenwirkt, wobei diese zweiten Nocken (34, 35) von außerhalb der steifen Aufnahmewand (5) her zugänglich sind, wenn der Behälter (2a) in die Öffnung eingesetzt ist, so daß es genügt, auf die beiden zweiten Nocken (34, 35) in Richtung ihrer Annäherung an das zentrale Teil (31) des Sockels zu drücken, um die flexiblen Arme (15, 16) in Richtung auf das zentrale Teil (31) zu schwenken, und anschließend die beiden anderen Klemmnocken (21, 22) von den Rändern der Aufnahmeöffnung (4) zu lösen, was so dann die Entnahme des Behälters ermöglicht und das Herausnehmen der Zelle (7) erleichtert.

2. Herausnehmbarer Behälter nach Anspruch 1, dadurch gekennzeichnet, daß sein Sockel (2a) nicht mit der Außenfläche (28) der steifen Aufnahmewand (5) bündig abschließt, sondern gegen diese um eine Höhe (h) leicht nach außen vorragt, die ausreicht, den Zugang zu den zweiten Nocken (34, 35) zu erleichtern, wenn sich der Behälter (2a) in seiner Aufnahmeöffnung (4) befindet.

3. Herausnehmbarer Behälter nach Anspruch 1 oder 2, dadurch gekennzeichnet, daß der Abstand (d) zwischen dem zentralen Teil (31) des Sockels (2a) und jedem der beiden seitlichen Teile (32, 33) im wesentlich dem Abstand entspricht, der jeden der flexiblen Arme (15, 16) von der mittigen Bodenplatte (6) trennt, die ihrerseits mit den Klemmorganen (11, 12, 13, 23, 24) den zentralen Raum (30) zur Aufnahme und zum Festklemmen der Zelle (7) definiert.

## Claims

1. A releasable electrical battery holder, particularly for a button cell (7), the holder (1a) being of a one-piece construction made from a semi-rigid plastics material and providing, apart from a central space (30) for receiving and retaining the cell (7), two flexible arms (15, 16) located one on each side of the central space (30), said two arms (15, 16) each having a free end carrying a lug (21, 22) adapted to provide, in a releasable manner and in cooperation with the baseplate (2a) of said holder (1a), retaining of the holder in an opening (4) provided for this purpose in a rigid receiving wall (5), characterized in that said baseplate (2a) is not of a one-piece construction but is composed of three distinct and mutually separated parts, namely:
- a central part (31) which support a non-negligible portion (16, 6) of the projections or wall portions that define the central space (30) for receiving and retaining the cell (7); and
- two lateral parts (32, 33) which, being located at opposite sides of this central part (31) and being spaced therefrom, are carried by the respective free end portions of said two flexible arms (15, 16), so as to define on each arm a second retaining lug (34, 35) located beyond the first one (21, 22) and cooperating therewith, these second lugs (34, 35) being, when the holder (2a) is in place in said opening (4), accessible from outside of the rigid receiving wall (5), in such a manner that it is sufficient to apply pressure on these two second lugs (34, 35) in the sense that tends to bring them closer to the central part (31) of said baseplate in order to cause the flexible arms (15, 16) to approach the central part (31) and as a consequence to cause the two other retaining lugs (21, 22) to clear the edges of the receiving opening (4), and which then enables the holder to be extracted and furthermore facilitates extraction of the cell (7).

2. Releasable holder according to claim 1, characterized in that its baseplate (2a) is not flush with the outer face (28) of said rigid receiving wall (5), but protrudes outwardly therefrom by a height (h) that is sufficient to facilitate accessibility to the second lugs (34, 35) when said holder (2a) is in place in its receiving opening (4).

3. Releasable holder according to claim 1, characterized in that the distance (d) separating the central part (31) of the baseplate (2a) and each one of the lateral parts (32, 33) is substantially equal to the distance separating each one of the flexible arms (15, 16) from the central bottom plate (6) which defines, together with retaining members (11, 12, 13, 23, 24), said central space (30) for housing and retaining the cell (7).
